(19) **Europäisches Patentamt / European Patent Office / Office européen des brevets**

(11) **EP 2 978 157 A1**

(12) # EUROPEAN PATENT APPLICATION

(43) Date of publication:
**27.01.2016 Bulletin 2016/04**

(51) Int Cl.:
***H04L 5/00*** (2006.01)

(21) Application number: **14306194.3**

(22) Date of filing: **24.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Kucera, Stepan**
 **Dublin, 15 (IE)**

• **Lopez-Perez, David**
 **Dublin, 15 (IE)**

(74) Representative: **Mills, Julia et al**
 **Script IP Limited**
 **18 Bridge Street**
 **Frome Somerset BA11 1BB (GB)**

Remarks:
Amended claims in accordance with Rule 137(2) EPC.

(54) **Control channel resource allocation in wireless communication networks**

(57)    A method, computer program and network node for use within a wireless communication network are disclosed. The method comprises: for a plurality of control channel resources that are available to the network node for locating control messages for transmission towards the user equipment, assessing whether a signal transmitted by the network node on the control channel resource has at least a predetermined quality level. The signal quality assessing step includes assessing potential interference within the control channel resource from control messages sent from at least one neighbouring network node. A set of user equipment identifiers is then determined by selecting user equipment identifiers that allow the control messages for the user equipment to be located in at least a predetermined number of the control channel resources where the quality level of the signal is assessed to be above the predetermined quality level.

FIG. 6

**Description**

<u>FIELD OF THE INVENTION</u>

The field of the invention relates to wireless communication networks and to a method, network node and computer program for allocating user equipment identities and control channel resources within these networks.

<u>BACKGROUND</u>

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. Abase station or network node is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment. When a user equipment is within an area served by a base station, communications maybe established between the user equipment and the base station over radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

As noted, heterogeneous networks (HetNets) consist of low-power low-range small cells and high-power high-range macro cells. In the most efficient co-channel deployment, the small cells reuse the communication channels of the hosting macro cells to benefit from spatial reuse. Such deployments are characterized by high co-channel interference. This can be particularly problematic for communications on the control channel as interference-aware scheduling of control channel communication is generally not performed. In the LTE Release 10 and lower LTE Releases, for example, frequency-dependent interference-aware scheduling of the control signalling, in particular the physical downlink control channel (PDCCH) is not enabled, this is in contrast to the management of its data transmissions. Consequently, the performance of LTE control signalling degrades under inter-cell interference, which can lead to traffic and location-dependent failures in the control channel PDCCH delivery. This also implies a degradation of the data-plane performance because the control channel signalling conveys information on downlink and uplink scheduling grants and power control commands. Effectively, control channel failures reduce the small-cell coverage and capacity.

Although easy to implement and robust, the almost-blank subframes (ABS) and carrier aggregation (CA) approaches to control channel co-existence or interference cancellation in general are inherently suboptimal in establishing the inter-tier co-existence. This is because they rely on conservative blanking of entire macro-cell subframes and addition of new carrier components, respectively. Moreover, even the configuration of ABS and CA cannot resolve the problem of interference among the small cells themselves. The CA approach is also practically limited by the overall scarcity and high costs of the radio spectrum available to mobile network operators.

It would be desirable to be able to reduce co-channel interference of the control channel between neighbouring cells.

<u>SUMMARY</u>

A first aspect of the present invention provides, a method, performed at a network node within a wireless communication network, of determining a set of user equipment identifiers for allocation to user equipment within a cell of said network node, said method comprising: for a plurality of control channel resources that are available to said network node for locating control messages for transmission towards said user equipment, assessing whether a signal transmitted by said network node on said control channel resource has at least a predetermined quality level, said signal quality assessing step including assessing interference within said control channel resource from control messages sent from at least one neighbouring network node; and determining said set of user equipment identifiers by selecting user equipment identifiers that allow said control messages for said user equipment to be located in at least a predetermined number of said control channel resources where said quality level of said signal is assessed to be above said predetermined quality level.

The present invention recognises that the random or quasi-random allocation of resources for control channel messages of the prior art causes random failures in these control messages to occur due to co-channel interference between neighbouring cells. In standard LTE networks, for example, the user equipment identifiers C-RNTIs are assigned to cell users in a random fashion from a pre-selected C-RNTI pool (e.g., the optimized set of the so-called "golden C-RNTI" that minimize under various system configurations the blockage of the common search used for cell-wide paging). The search space selection for a given C-RNTI, that is the location selected for transmitting a control message to a user equipment within the available locations for the user equipment with that C-RNTI is random as well, generally lacking any prioritization. Consequently, random PDCCH failures are common.

The present invention recognises that although the allocation of a location for the control message may be random, the available locations where it can be placed, that is the search space for that user equipment, is scheduled in a predetermined fashion that depends on the user equipment identifier C-RNTI and other factors. Thus, when the network cell topology is known the potential quality of a signal sent on different resources can be assessed by taking into account potential interference on these resources from neighbouring cells and other channel losses. In this way, resources that are available for control messages and which are likely to, or in some cases guaranteed to, have a low interference and hence a high signal quality can be determined.

Given that resources for control messages that are available for allocation depend on the user equipment identity, a set of user equipment identities can then be determined which would allow at least a predetermined number of these "good" resources to be allocated for control messages to that user equipment. In this way rather than assigning user equipment identities in a random way, a set of user equipment identities can be determined in which each identity would allow the allocation of at least some resources that allow the transmission of good quality signals with low interference. A user equipment identity from this set can then be allocated to a user equipment when it first communicates with a network node.

In some embodiments, said control message is transmitted with one of a plurality of levels of aggregation, and said signal quality assessing step is performed for said plurality of levels of aggregation, said predetermined quality depending on said level of aggregation; and wherein said step of selecting user equipment identifiers comprises for each of at least two levels of said levels of aggregation, selecting user equipment identifiers that allow said control messages for said user equipment to be located in at least a predetermined number of said control channel resources where said quality of said signal is assessed to be above said predetermined quality corresponding to said level of aggregation, said predetermined number depending on said level of aggregation.

Different levels of aggregation are used for transmitting control signals depending on the predicted signal-to-noise ratio of the transmission. In this respect, in order for a signal to be successfully received and decoded it must exceed a minimum required signal-to-noise ratio, a higher aggregation level, means that more data is transmitted to send the same amount of information making it easier to receive and decode the message where noise is present. A higher aggregation level therefore allows a signal with a lower signal to noise ratio to be successfully received. Thus, for a particular user equipment a particular aggregation level may be selected by the scheduler depending on factors which affect the signal quality such as the location of the user equipment and/or its mobility. Given this functionality of the scheduler, when allocating control channel resources the level of aggregation should be taken into account. Thus, when assessing what control channel resources are available that provide a signal quality above a predetermined level this can be done for the different possible aggregation levels. In this regard, different quality levels may be required for different levels of aggregation and, thus, when assessing the resources which have the required signal levels, different quality levels can be set.

Then when determining which cell identifiers would allow the allocation of the resources, cell identifiers that provide a set number of "good" resources at each of at least two aggregation levels are determined.

It should be noted that depending on how many available user equipment IDs are required by the system, a different number of levels of aggregation maybe considered. If a certain number, say 5, good or safe resources are to be available at each aggregation level then only a few cell identifiers may be identified as being suitable. Thus, in some cases fewer aggregation levels are considered and perhaps a fewer number of safe resources stipulated as being required for some of the aggregation levels. This will increase the number of cell identifiers within the set that are available for selection. Other factors which affect the number of cell identifiers within the set that meet the required number of good or safe resources are the signal quality levels specified for these resources.

In some embodiments, said signal quality assessing step is performed with respect to channel gain and transmit power information for said signal transmitted on said control channel resource.

When assessing the signal quality of a control channel resource, channel gain and transmit power information may be considered. In this regard, channel gain will depend on the topology of the system, the location of the user equipment and the interference due to other control channels. In many cases, one or more scenarios will be considered each having given channel gains that relate to realistic examples of user equipment at different points within the cell. In this regard, several scenarios regarding user equipment which are close to the network node and those that are remote from it and perhaps close to neighbouring cells maybe considered when providing example channel gains for the assessing step.

In some embodiments, said channel gain is set to a value appropriate for a user equipment located towards an edge of said cell.

It may be advantageous to set the channel gain to a value that is appropriate for a worst case user equipment, or perhaps one that is within 10% of what one would expect a worst case user equipment to experience. If the channel gain is set to a value appropriate for such a worst case user then the control channel resources that are assessed to meet the required quality levels will be safe channel quality resources that can be allocated to pretty much any user equipment within the cell and will provide a suitable signal quality. However, by setting it for such a worst case scenario, it may be that there are not many channel quality resources available and therefore not many cell identifiers for allocation. Thus, in some cases it may be desirable to set the channel gain at a different level, in the recognition that there will be some failures where user equipment are in positions where signal quality is particularly poor.

Another level that can be varied is the predetermined quality level. In some embodiments it comprises a safe quality level at which it is determined that a user equipment can receive and decode said message.

Once again, by varying the predetermined quality level, one can affect the number of control channel resources that are considered to be "good". Thus, it can be set to a safe level such that these channel quality resources are considered safe for the user equipment with a channel gain of the assessing step, or it can be set such that the quality levels are good and will, for most user equipment, be safe.

In some embodiments, said signal quality assessing step comprises assessing a signal to interference and noise ratio (SINR) of said signal.

Although embodiments may assess the signal quality in a number of ways, in some embodiments a signal-to-interference-and-noise ratio of the signal is assessed. A signal-to-interference-and-noise ratio is a good measure of whether or not a signal can be decoded and therefore is a good measure of the quality of the signal.

In some embodiments, said signal quality assessing step is performed for at least two classes of user equipment, said user equipment being classified based on at least one of its distance from said network node and parameters associated with mobility.

As noted previously, in the signal quality assessing step the signal quality will be assessed for a particular scenario such as a particular channel gain and this will depend on the user equipment location. In some cases, it maybe advantageous to assess signal quality for different classes of user equipment; for example, user equipment that are located towards a cell edge and will receive a signal of a lower quality, and those located towards the centre of the cell which will receive a better quality signal. In addition to their distance from the network node affecting the quality of the signal, their mobility may also affect the quality of the signal they receive and, thus, mobility parameters may also be used to classify the user equipment.

By considering different classes of user equipment, different predetermined quality levels appropriate for a particular class of user equipment can be used and channel resources that are suitable for a particular class of user equipment can be determined. In this way, the control channel resources can be more efficiently used as there will be additional ones that are marked as safe for a class of user equipment, that may have a low mobility and/or be closer to the centre of the network node, for example, and there will be others that are safe for all of the user equipment. The ones that are safe for all of the user equipment can then be used for the user equipment in a class that requires a high signal quality level.

In some embodiments, the method comprises a further step of determining for a user equipment with a given user equipment identity, said control channel resources that are available for said user equipment; and locating a control message for a user equipment in one of said available control channel resources where said quality of said signal was assessed to be above said predetermined quality level.

By providing a set of user equipment identities that allow control channel resources to be allocated that are assessed to have a signal quality level above a predetermined level then, when locating a control message for a user equipment having one of these user equipment identities, control channel resources can be selected from the available control channel resources where the quality of the signal was assessed to be above the predetermined quality level. In this way, good and in some cases safe, control channel resources can be used for the control messages to the user equipment and random failures will be significantly reduced and in some cases avoided altogether.

In some embodiments, the method comprises a further step of determining for a user equipment with a given user equipment identity, said control channel resources that are available for said user equipment; and locating a control message for a user equipment that is located such that signals are received from the network node with a high quality in one of said available control channel resources where said quality of said signal was assessed to be below said predetermined quality level.

Although locating the control message within one of the control channel resources that are determined to have a high quality signal level means that control signals are generally successfully received and decoded, there is a limited number of these control channel resources and it may in some cases be advantageous not to use them where a user equipment is located in a position within the cell where it is likely that it will receive a signal with a high quality. In this respect, it maybe close to the network node and far from neighbouring cells. In such cases, it may be advantageous not to use one of the limited "safe" control channel resources, but rather to select another resource available to a UE with that identity as it is likely that this user equipment will successfully receive the signal in any case.

In some embodiments, said method further comprises determining for a user equipment with a given user equipment identity, said control channel resources that are available for said user equipment; and determining which of said at least two classes said user equipment falls within; and locating a control message for a user equipment in one of said available control channel resources where said quality of said signal was assessed to be above said predetermined quality level for said class of said user equipment.

Where the signal quality assessing step has been performed for several classes of user equipment then, when locating control messages for a user equipment in one of the available control channel resources, the control channel resource can be selected depending on the class of the user equipment, such that the signal quality level will be at an appropriate level for that class of user equipment. In this way, although there are more assessing steps performed, suitable control channel resources for particular user equipment can be selected and this increases the number of good or safe control channel resources that can be used.

In some embodiments, the method comprises the further steps of determining a minimum transmission power required for transmitting a control message to said user equipment to achieve a desired signal to noise ratio of said signal that allows said user equipment to receive and decode said signal; and setting said transmission power at or close to said minimum level when transmitting said control signal.

The signal quality level will depend on the transmission power and a minimum transmission power to achieve the required level can be determined for a particular aggregation level and control channel resource. It may then be advantageous to set this transmission at or close to the minimum level such that the control signal is successfully received but transmission power is reduced and interference levels arising from this signal are also reduced. In this regard, close to the minimum level may be at or up to 10% higher than the minimum level.

In some embodiments, said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising determining for a user equipment with a given user equipment identity said control channel resources that are available for said user equipment; and locating said control message within a block of one of said available control channel resource where said quality of said signal was assessed to be above said predetermined quality level; wherein where said predetermined number of elements of said control message is low enough for said control message to fit within a partially filled one of said blocks, said step of locating comprises preferentially selecting a partially filled block where one is available.

The control channel resources may be available as blocks of time frequency resources and each of the control messages may be a predetermined number of elements, the number depending on the aggregation level, arranged contiguously within the blocks. Thus, where the aggregation level is high, the control message may fill a block, but where it is lower it will only use a partial amount of the block. It is therefore advantageous when allocating the control messages to these limited resources if control messages that can fit within partially filled blocks are placed preferentially within them, allowing the control messages with a higher aggregation level that require more elements within the blocks to use the available empty blocks.

In some embodiments, said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising determining for a user equipment with a given user equipment identity said control channel resources that are available for said user equipment; and scheduling a plurality of control messages by locating said control messages within blocks of said available control channel resources, at least some of said plurality of control messages being located within blocks where said quality of said signal was assessed to be above said predetermined quality level; wherein when said scheduling step is complete, determining where a control message is located in a block adjacent to elements that are still available for use and increasing a level of aggregation of said control message by using at least one of said adjacent available elements.

Although, in preferred embodiments, it may be advantageous to try to place control messages with a lower aggregation level in partially filled blocks, the blocks will in general not always be completely filled. It may therefore be advantageous, when the scheduling step is complete, to determine where control messages are adjacent to available spaces and increase the level of aggregation of these control messages to fill the empty spaces and thereby reduce the probability of the control messages not being successfully received without taking up any additional resource that might be used by another signal.

A second aspect of the present invention provides a network node for use within a wireless communication network said network node comprising: determination logic operable to determine a set of user equipment identifiers for allocation to user equipment within a cell of said network node, said determination logic comprising: assessing logic operable to assess, for a plurality of control channel resources that are available to said network node for locating control messages for transmission to said user equipment, whether a signal transmitted by said network node on said control channel resource has at least a predetermined quality level, said signal quality assessing step including assessing interference within said control channel resource from control messages sent from at least one neighbouring network node; and selecting logic operable to select user equipment identifiers that allow said control messages for said user equipment to be located in at least a predetermined number of said control channel resources where said quality of said signal is assessed to be above said predetermined quality level.

A third aspect of the present invention provides a computer program operable, when executed on a computer, to control said computer to perform a method according to a first aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, by way of example with reference to the accompanying drawings, in which:

Figure 1 illustrates the scheduling probability of logical CCEs at a macro cell with 100 users of sustained load as a function of time;
Figure 2 illustrates the maximum number of small-cell logical PDCCH search spaces (LPC) at L = 8 which satisfy SINRmin $\geq$ -4 dB as a function of the minimum small-cell radius;
Figure 3 illustrates the average small-cell user capacity per subframe as a function of the small-cell offset from the hotspot centre with indicated corresponding fraction of original coverage.
Figure 4 illustrates the mobility problem (left, MC UE handover failure due to SC interference) and the capacity problem (right, SC UE data loss due to MC interference) in co-channel heterogeneous networks;
Figure 5 shows table 1 which gives active/inactive logical PDCCH search spaces (LPC) at aggregation level L=8 in green/red cells to reduce the aggregate overlap of active channels below 66%. CRS, PHICH, PCFICH, LPC0 are the cell-specific always-on broadcast channels;
Figure 6 schematically shows a network node according to an embodiment of the present invention;
Figure 7 schematically shows time frequency resources for allocation to control messages; and
Figure 8 shows steps in a method according to an embodiment of the present invention.

DESCRIPTION OF THE EMBODIMENTS

Before discussing the example embodiments in any more detail, first an overview will be provided.

Embodiments recognise that the available resources that can be allocated for control messages to transmit to user equipment is determined based on the user ID allocated to the user equipment by a network node when it first communicates with the network node and on the physical ID of the cell itself. In this regard there are time frequency resources available for transmitting control messages from the network node to the user equipment prior to the two being connected. In order to limit the amount of time frequency space that the user equipment needs to search to find control messages that are directed to it, the time frequency space that the control messages can be located in is limited and this limitation is based on the physical ID (PID) of the cell and the identifier (C-RNTI) given to the UE by the network node. Given this, it is possible to determine for neighbouring network nodes which resources are available for use for locating control messages. This information can in turn be used to determine which of the available resources are likely to suffer most from interference from the neighbouring cells and which are likely or indeed in some cases are guaranteed to have the best signal quality.

Furthermore, as the resources that are allocatable for a control message to send to a user equipment are dependent on the user ID given to the UE by the network node, once the network node has determined which resources are likely to provide high signal quality, cell IDs can be given to user equipment that allow at least some of these high quality resources to be used to locate control messages to that user equipment. In this way the user equipment can be provided with IDs which allow control messages transmitted to it to be located in resources where they are unlikely to suffer interference from other cells.

In this regard, data transmissions are considered to be less affected by co-channel interference than control transmissions thanks to the possibility of periodical frequency-dependent data scheduling on the basis of updated channel quality reports. However, for the control plane, current standards essentially allow active scheduling of control messages only in the time domain, possibly in conjunction with channel quality-aware de-boosting of transmission power. Ultimately, control plane failures can also negatively affect the decoding of the data plane as the control plane conveys the information on downlink/uplink scheduling grants as well as power control commands. It will be appreciated that the problem of control plane reliability aggravates with the density of SC deployments. Determining a set of user identities that allow locating of control messages in safe or high quality control channel resources addresses these problems.

It should also be noted that the number of the PDCCH search spaces depends on the PDCCH aggregation level L (= 1, 2, 4, 8), which is the number of unit resources (the so-called control channel elements, CCEs) allocated to the search spaces depending on the channel quality reported by the user. A higher L implies a more robust PDCCH but also a lower number of available search spaces per user.

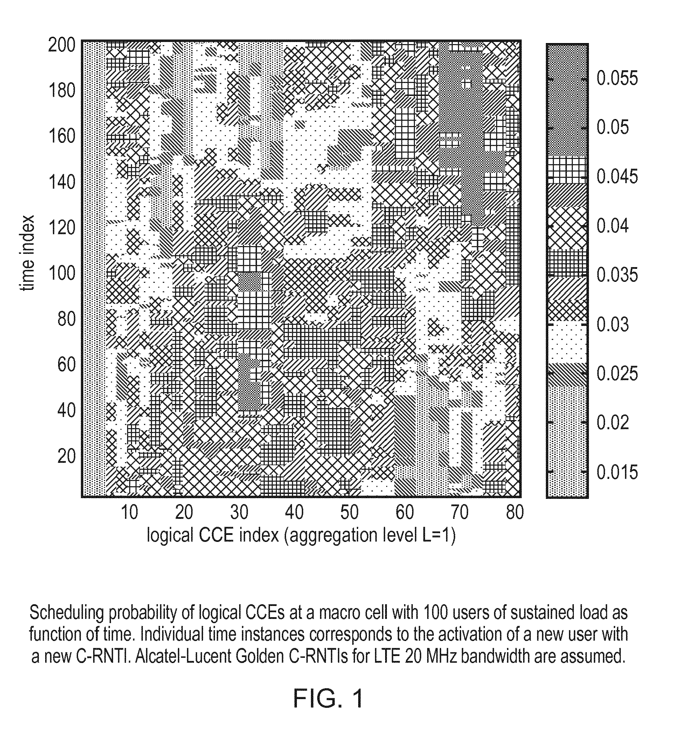

A study of the algorithms that are defined in LTE for PDCCH resource allocations shows that the resource usage is NOT homogeneous (uniform) under standard network operation (see Fig. 1). In other words, some resources are more desirable for use than others where intra-cell PDCCH collisions are to be avoided. This holds for both logical and physical resources given the determinism of the logical-to-physical resource mapping in LTE standards. From this perspective, the current randomization approach is largely suboptimal.

Embodiments define a method for a systematic usage of the low-interference resources for PDCCH transmissions. Such PDCCH resources may be denoted as "good" or in some cases "safe". Thanks to the specifics of the LTE standard, the location of such safe PDCCH search spaces can be determined pro-actively (before-hand) from static network parameters such as the physical cell identifiers. For the safe spaces one can then have reliable PDCCH reception, even to some critical cell-edge users that suffer the most from PDCCH failures. An example of how to determine such safe PDCCHs is given below.

In summary embodiments seek to:

(i) assign to cell users such C-RNTIs that have a minimum required number of safe PDCCH search spaces simultaneously at multiple pre-defined aggregation levels
*(to maximize the scheduling flexibility of safe PPDCCHs in view of varying inter-user blocking and aggregation level),*
(ii) transmit the PDCCH messages of cell-edge (cell-centre) user over the safe (unsafe) PDCCH search spaces
*(to guarantee the PDCCH reception reliability and resource efficiency),* and, optionally,
(iii) use the minimum power level necessary to guarantee the required signal-to-noise-and-interference ratio (SINR) of the PDCCH message at the receiver
*(to reduce overall interference, i.e. improve the inter-tier co-existence).*

Simulations indicate that the usage of

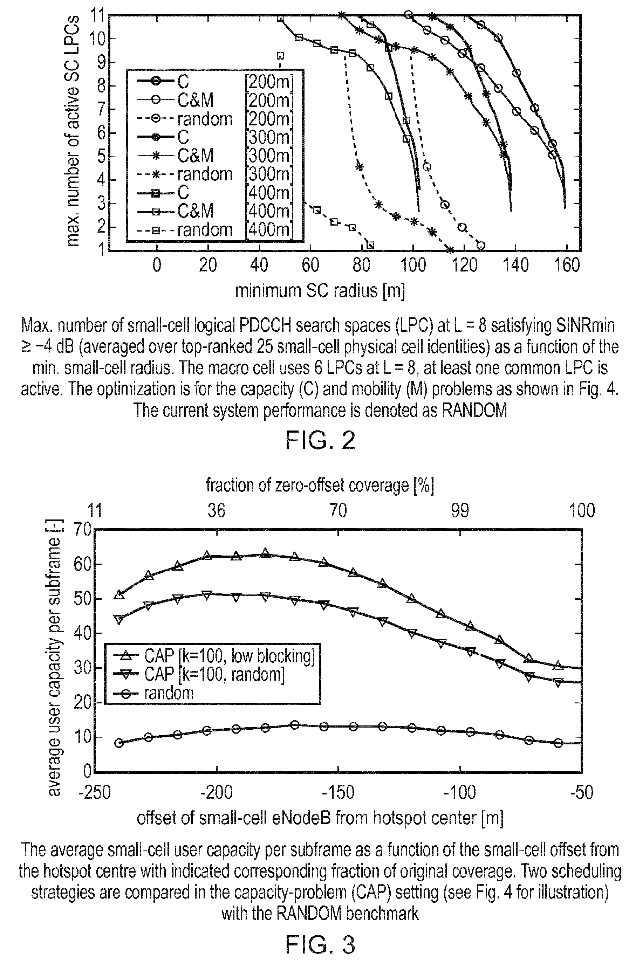

- the first point (i) allows *doubding* the small-cell size within the OFS framework (see Fig. 2),
- the second point (ii) allows *tripling* the PDCCH capacity per subframe compared to the standard approach of random C-RNTI management (see Fig. 3).

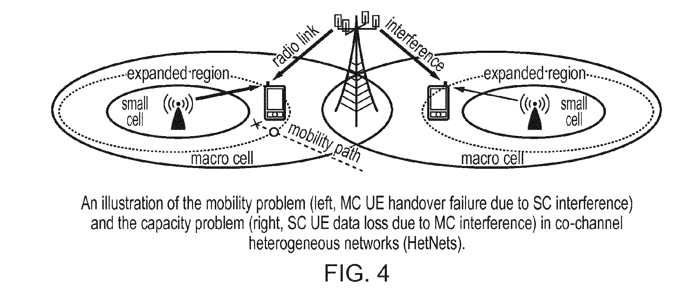

If we consider a single aggressor and a single victim cell, then in the capacity-problem scenario (see Fig. 4 for illustration), the small cell is the victim cell while the macro cell is the aggressor cell. The roles of the two cells are reversed in the mobility-problem scenario.

Within the set of contiguous N_CCE,k CCEs in subframe k (N_CCE,k is primarily a function of the number of HARQ (hybrid automatic repeat request) processes, and the control frame indicator), the logical PDCCH search space (LPC) of a UE identified by a C- RNTI consists of M consecutive logical PDCCH candidates where M = 6, 6, 2, 2 for L = 1, 2, 4, 8, respectively. The m-th logical PDCCH candidate for $m \in [1, M]$ comprises L consecutive CCEs starting at the CCE indexed as

$$\text{Equation (1)}$$
$$CCE_{m,L}^{\min} = L\left[(Y_k + m - 1) \quad \mod \lfloor N_{\text{CCE},k}/L \rfloor\right],$$
$$Y_k = 39827Y_{k-1} \quad \mod 65537,$$
$$Y_{-1} = \text{RNTI} \in [10, 65522].$$

From the above one can see that the control channel resource that is available is dependent on the UE identifier RNTI.

Aggressor cell

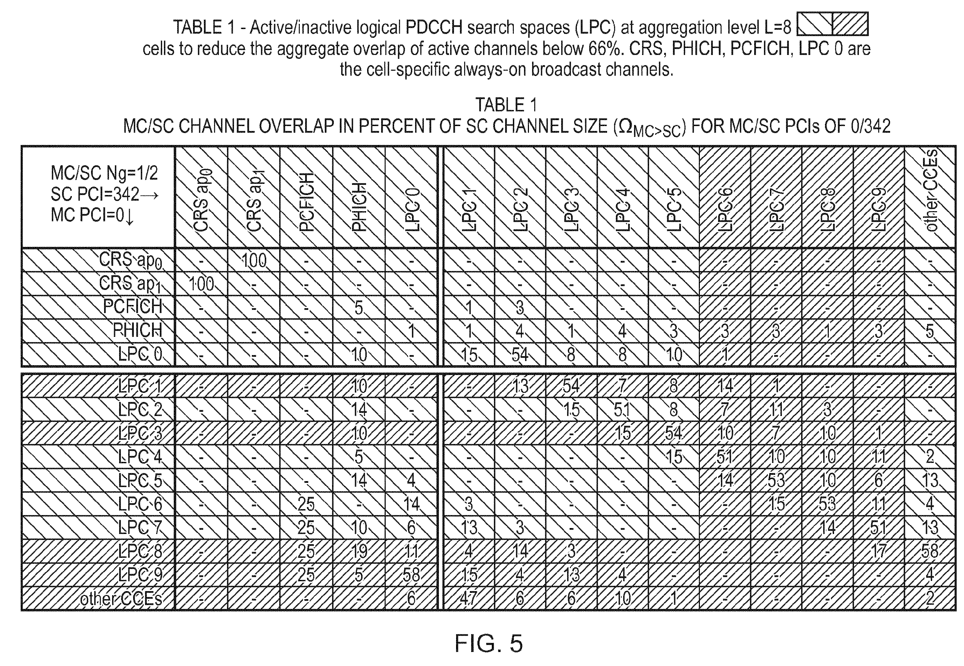

The aggressor cell uses a certain power profile for its logical PDCCH CCEs. For example, some CCEs are broadcasted at maximum power while others are muted (zero power). A simple combinatorial search can be conducted to minimize the maximum aggregate overlap of two physical search spaces of the aggressor and victim cells for a given aggregation level (see Example of Table 1 in figure 5).

Victim cell

The victim cell pre-computes the effective SINR of all logical PDCCH search spaces for all aggregation levels and user classes (e.g., cell-edge users and cell-centre users). To this end, the EESM mapping can be used to map the per-resource element SINR to the overall effective PDCCH SINR. Similarly to the parameter N_CCE,k, the resource overlap can be computed by the LTE standard given the knowledge of PCIs, number of cell antenna ports, number of cell HARQ processes, and control frame indicator. In an alternative example, the victim cell considers only the sole channel overlap as an evaluation metric.

If available, the victim cell computes from the aggressor-cell C-RNTIs the activity probability of individual logical PDCCH search spaces at the macro cell to infer the resources to be used by the victim cell. If no knowledge of the macro-cell scheduling preferences is given, this can be done by using the above Equation 1 assuming a uniformly random activation of any search space for all active C-RNTIs of the aggressor cell and all aggregation level.

Then, for each user class, the safety level of each PDCCH search space is determined by using the computed activity probability and effective SINR (overlap). To this end, minimum likelihood of exceeding a minimum required SINR at a given aggregation level must be satisfied. For example, a safe PDCCH much reach -4 dB for L=8, -1 dB for L=4, 2 dB for L=2, and 5 dB for L=1 with a probability of over 95%. If the proposed approach of orthogonally-filled subframes is configured, a single offline computation of the safe search spaces is needed. In case of probabilistic tracking of the macro-cell behaviour, slow periodical updates at the order of user arrival rate (C-RNTI updates) are needed, i.e. at the order of seconds to minutes.

Assuming the specific configuration of logical PDCCH search spaces (LPC) from Table 1 (see Figure 5) and the scenario described in the following, Tables 2-5 (below) indicate with ones (1) which LPCs achieve an SINR that is above the required threshold for a successful reception even in case of the worst-off small-cell user (i.e. the user with the worse wideband SINR). Hence, such LPCs should be safe at all times for any (cell-edge) user. Note that such LPCs exist for *all* aggregation levels. Zeros (0) indicate unsafe LPCs for the worst-off UE, but such LPCs still can be used for cell-centre UEs for a reliable PDCCH transmission. The simulated scenario had a hexagonal macrocell layout with 2 tiers of interferers and an 800m inter-site distance. Macrocell base stations have 3 sectors and the small cell base station of interest is 200 meters away from the central macrocell base station and located on the main beam direction of one of its sectors. The small-cell selection bias is 6 dB, and the small/ macro cell activate factor is 81/54% of their available CCEs, respectively. SINR min represents the lowest SINR achieved by the worst-off (cell-edge) small-cell user.

TABLE 2 - *Safety of PDCCH search space for aggregation level 8 and SINR min = -4 dB*

| logical SS Index | 1 | 2 | 3 | 4 | 5 | 6 |
|---|---|---|---|---|---|---|
| SINR wUE > SINR min | 1 | 1 | 1 | 1 | 1 | 1 |

TABLE 3 - *Safety of PDCCH search space for aggregation level 4 and SINR min = -1 dB*

| logical SS Index | 1 | 2 | 3 | 4 | 5 | 6 | 7 | 8 | 9 | 10 | 11 | 12 | 13 |
|---|---|---|---|---|---|---|---|---|---|---|---|---|---|
| SINR wUE > SINR min | 1 | 1 | 1 | 1 | 1 | 1 | 1 | 1 | 1 | 1 | 1 | 1 | 1 |

TABLE 4 - *Safety of PDCCH search space for aggregation level 2 and SINR m in = 2 dB*

| logical SS Index | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| SINR wUE > SINR min | 1 | 1 | 1 | 1 | 1 | 1 | 1 | 0 | 0 | 0 | 0 | 1 | 1 | 1 |
| logical SS Index | 15 | 16 | 17 | 18 | 19 | 20 | 21 | 22 | 23 | 24 | 25 | 26 | 27 | |
| SINR wUE > SINR min | 1 | 1 | 0 | 0 | 0 | 1 | 1 | 1 | 1 | 0 | 0 | 1 | 1 | |

**TABLE 5** - *Safety of PDCCH search space for aggregation level 8 and SINR m in = 5 dB*

| logical SS Index | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| SINR wUE > SINR min | 0 | 0 | 0 | 0 | 1 | 0 | 0 | 0 | 1 | 1 | 0 | 0 | 0 | 0 | 0 |
| logical SS Index | 16 | 17 | 18 | 19 | 20 | 21 | 22 | 23 | 24 | 25 | 26 | 27 | 28 | 29 | 30 |
| SINR wUE > SINR min | 0 | 0 | 0 | 0 | 0 | 0 | 0 | 1 | 0 | 0 | 1 | 1 | 0 | 1 | 0 |
| logical SS Index | 31 | 32 | 33 | 34 | 35 | 36 | 37 | 38 | 39 | 40 | 41 | 42 | 43 | 44 | 45 |
| SINR wUE > SINR min | 1 | 0 | 0 | 0 | 0 | 0 | 0 | 0 | 0 | 0 | 1 | 0 | 1 | 0 | 1 |
| logical SS Index | 46 | 47 | 48 | 49 | 50 | 51 | 52 | 53 | 54 | | | | | | |
| SINR wUE > SINR min | 0 | 0 | 0 | 0 | 0 | 0 | 0 | 0 | 0 | | | | | | |

Then, the victim cell assigns C-RNTIs to its users that are associated with at least **X** of the safe PDCCH search spaces for a given aggregation level, whereby such constraints is imposed for multiple aggregation levels - say 2 or 3 for maximum flexibility.

For example, assuming the aggregation level 1, for which 6 <u>contiguous</u> PDCCH search spaces are associated with each C-RNTI, the users can be given C-RNTIs that are associated by the Equation 1 with search spaces with given safety conditions. For example, the search spaces indicated by the ovals in Table 6 have 3-4 safe LPCs out of the 6 contiguous LPCs.

**TABLE 6** - *Safety of PDCCH search space for aggregation level 8 and SINR m in = 5 dB with indicated search spaces to be associated with different C-RNTIs.*

| logical SS Index | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| SINR wUE > SINR min | 0 | 0 | 0 | 0 | 1 | 0 | 0 | 0 | 1 | 1 | 0 | 0 | 0 | 0 | 0 |
| logical SS Index | 16 | 17 | 18 | 19 | 20 | 21 | 22 | 23 | 24 | 25 | 26 | 27 | 28 | 29 | 30 |
| SINR wUE > SINR min | 0 | 0 | 0 | 0 | 0 | 0 | 0 | 1 | 0 | 0 | 1 | 1 | 0 | 1 | 0 |
| logical SS Index | 31 | 32 | 33 | 34 | 35 | 36 | 37 | 38 | 39 | 40 | 41 | 42 | 43 | 44 | 45 |
| SINR wUE > SINR min | 1 | 0 | 0 | 0 | 0 | 0 | 0 | 0 | 0 | 0 | 1 | 0 | 1 | 0 | 1 |
| logical SS Index | 46 | 47 | 48 | 49 | 50 | 51 | 52 | 53 | 54 | | | | | | |
| SINR wUE > SINR min | 0 | 0 | 0 | 0 | 0 | 0 | 0 | 0 | 0 | | | | | | |

Tables 7 and 8 show that there are tens to hundreds of such C-RNTIs if *three* aggregation levels are simultaneously controlled in two to three subframes simultaneously for better HARQ responsiveness of the cell scheduler (the diagonal of the tables indicates the one subframe case).

Note that the tables indicate the C-RNTI availability for *one* particular subframe combination. There are 100 or 1000 of such combinations for two or three controlled subframes. Hence, very high cell loads can be supported. Moreover, the worst-case UE is assumed - significantly more C-RNTI can be used if the interference conditions are relaxed.

**TABLE 7** - *Number of (i) C-RNTIs and (ii) ALU Golden with at least 2/2/3 safe search spaces for L=4/2/1 in two subframes X and Y.* **W orst-off user** *is assumed.*

| (i) C-RNTIs | | | | | | | | | | |
|---|---|---|---|---|---|---|---|---|---|---|
| X/Y | 1 | 2 | 3 | 4 | 5 | 6 | 7 | 8 | 9 | 10 |
| 1 | **1603** | **33** | **53** | **41** | **35** | **38** | **38** | **43** | **36** | **40** |
| 2 | **33** | **1602** | **33** | **53** | **41** | **35** | **38** | **38** | **43** | **36** |
| 3 | **53** | **33** | **1602** | **33** | **53** | **41** | **35** | **38** | **38** | **43** |
| 4 | **41** | **53** | **33** | **1603** | **33** | **53** | **41** | **35** | **38** | **38** |
| 5 | **35** | **41** | **53** | **33** | **1602** | **33** | **53** | **41** | **35** | **38** |
| 6 | **38** | **35** | **41** | **53** | **33** | **1601** | **33** | **53** | **40** | **35** |
| 7 | **38** | **38** | **35** | **41** | **53** | **33** | **1603** | **33** | **53** | **41** |
| 8 | **43** | **38** | **38** | **35** | **41** | **53** | **33** | **1603** | **33** | **53** |
| 9 | **36** | **43** | **38** | **38** | **35** | **40** | **53** | **33** | **1601** | **33** |
| 10 | **40** | **36** | **43** | **38** | **38** | **35** | **41** | **53** | **33** | **1602** |
| (ii) ALU Golden C-RNTIs | | | | | | | | | | |
| X/Y | 1 | 2 | 3 | 4 | 5 | 6 | 7 | 8 | 9 | 10 |
| 1 | **656** | **11** | **22** | **18** | **19** | **17** | **15** | **17** | **15** | **22** |
| 2 | **11** | **674** | **14** | **28** | **21** | **15** | **18** | **17** | **21** | **18** |
| 3 | **22** | **14** | **667** | **12** | **22** | **17** | **13** | **15** | **14** | **16** |
| 4 | **18** | **28** | **12** | **670** | **14** | **24** | **17** | **14** | **19** | **14** |
| 5 | **19** | **21** | **22** | **14** | **653** | **15** | **24** | **19** | **17** | **21** |
| 6 | **17** | **15** | **17** | **24** | **15** | **622** | **16** | **24** | **17** | **12** |
| 7 | **15** | **18** | **13** | **17** | **24** | **16** | **652** | **13** | **17** | **18** |
| 8 | **17** | **17** | **15** | **14** | **19** | **24** | **13** | **659** | **7** | **27** |
| 9 | **15** | **21** | **14** | **19** | **17** | **17** | **17** | **7** | **652** | **9** |
| 10 | **22** | **18** | **16** | **14** | **21** | **12** | **18** | **27** | **9** | **623** |

**TABLE 8** - *Maximum number of (i) C-RNTIs and (ii) ALU Golden C-RNTIs with at least 2/2/3 safe search spaces for L=4/2/1 in two subframes X and Y and a third subframe other than X or Y.* **W orst-off user** *is assumed.*

| (i) C-RNTIs | | | | | | | | | | |
|---|---|---|---|---|---|---|---|---|---|---|
| X/Y | 1 | 2 | 3 | 4 | 5 | 6 | 7 | 8 | 9 | 10 |
| 1 | **53** | **1** | **2** | **2** | **2** | **4** | **4** | **3** | **2** | **3** |
| 2 | **1** | **53** | **1** | **2** | **2** | **2** | **4** | **4** | **2** | **2** |
| 3 | **2** | **1** | **53** | **2** | **2** | **2** | **2** | **4** | **4** | **2** |
| 4 | **2** | **2** | **2** | **53** | **2** | **2** | **2** | **2** | **4** | **4** |
| 5 | **2** | **2** | **2** | **2** | **53** | **2** | **2** | **2** | **2** | **2** |
| 6 | **4** | **2** | **2** | **2** | **2** | **53** | **4** | **2** | **2** | **2** |
| 7 | **4** | **4** | **2** | **2** | **2** | **4** | **53** | **4** | **2** | **2** |
| 8 | **3** | **4** | **4** | **2** | **2** | **2** | **4** | **53** | **4** | **3** |
| 9 | **2** | **2** | **4** | **4** | **2** | **2** | **2** | **4** | **53** | **4** |

(continued)

| (i) C-RNTIs | | | | | | | | | | |
|---|---|---|---|---|---|---|---|---|---|---|
| X/Y | 1 | 2 | 3 | 4 | 5 | 6 | 7 | 8 | 9 | 10 |
| 10 | **3** | **2** | **2** | **4** | **2** | **2** | **2** | **3** | **4** | **53** |
| (ii) ALU Golden C-RNTIs | | | | | | | | | | |
| X/Y | 1 | 2 | 3 | 4 | 5 | 6 | 7 | 8 | 9 | 10 |
| 1 | **22** | **1** | **2** | **2** | **2** | **1** | **1** | **2** | **2** | **2** |
| 2 | **1** | **28** | **1** | **2** | **2** | **2** | **1** | **1** | **2** | **2** |
| 3 | **2** | **1** | **22** | **2** | **2** | **1** | **1** | **1** | **1** | **1** |
| 4 | **2** | **2** | **2** | **28** | **2** | **2** | **2** | **1** | **2** | **1** |
| 5 | **2** | **2** | **2** | **2** | **24** | **1** | **2** | **2** | **1** | **2** |
| 6 | **1** | **2** | **1** | **2** | **1** | **24** | **2** | **1** | **2** | **1** |
| 7 | **1** | **1** | **1** | **2** | **2** | **2** | **24** | **2** | **1** | **1** |
| 8 | **2** | **1** | **1** | **1** | **2** | **1** | **2** | **27** | **1** | **2** |
| 9 | **2** | **2** | **1** | **2** | **1** | **2** | **1** | **1** | **21** | **1** |
| 10 | **2** | **2** | **1** | **1** | **2** | **1** | **1** | **2** | **1** | **27** |

The subsequent PDCCH scheduling uses only such safe search spaces for the critical cell-edge users and prioritizes on the basis of the associated safety metric. Preferably, safe LPCs with the lowest aggregation level L and no blocking from already scheduled users are to be used to maximize the PDCCH capacity of the cell. To this end, LPCs with the minimum potential to block subsequently scheduled users are preferred. For example, each partially occupied LPC of aggregation level L=X should be first fully used (filled) by LPC with lower aggregations before a new LPC having L=X is partially blocked. In this way, the number available of LPC having L=X is maximized.

The transmission power for a control message sent in an LPC is set such that only the minimum necessary power to achieve the given PDCCH SINR is used to further reduce interference. Cell-centre users can use also the unsafe resources. In general, the available LPCs can be categorized into multiple safety classes depending on the user distance from the cell centre. In this regard different classes of user equipment can be considered when assessing the safety of the LPCs and different LOCs can be classified as safe for the different classes of UEs.

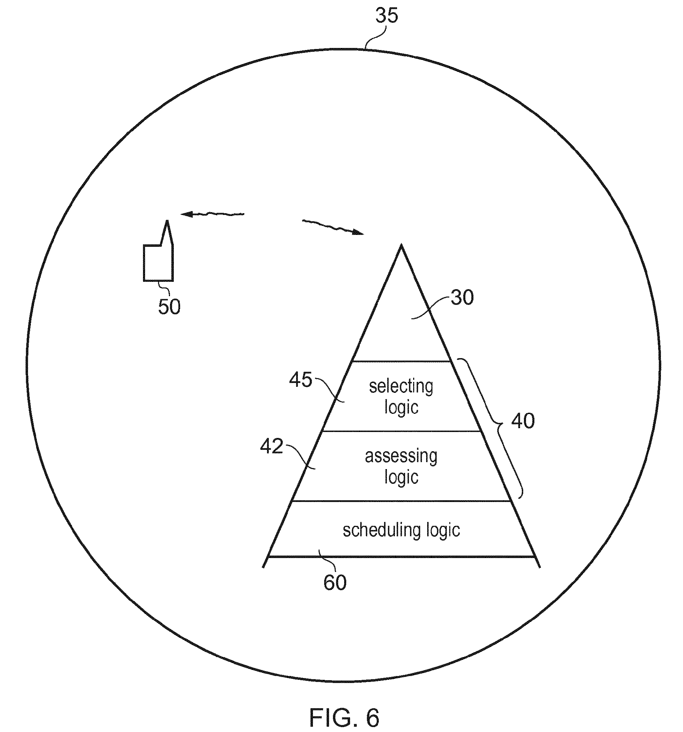

Figure 6 shows one of the network nodes of Figure 4 in more detail. Network node 20 comprises transmission and receiving circuitry 30 for wirelessly sending and receiving signals. There is also determination logic 40 for determining a set of user equipment identifiers for allocation to user equipment 50 within a cell 35 of said network node 20. This determination logic 40 maybe in the form of hardware or software and will comprise assessing logic 42 operable to assess, for a plurality of control channel resources that are available to the network node 20 for locating control messages for transmission to the user equipment 50, whether a signal transmitted by the network node 20 on the control channel resource has at least a predetermined quality level. This assessment will involve assessing interference within the control channel resource from control messages sent from at least one neighbouring network node (for the macro network node of Figure 4 this will be one of the small cells). The determination logic 40 will also have selecting logic 45 for selecting user equipment identifiers that allow the control messages for the user equipment to be located in at least a predetermined number of the control channel resources where the quality of the signal is assessed to be above the predetermined quality level, the so-called safe resources.

Once this set of user equipment identifiers have been identified, then when user equipment is detected within the cell, it is given a cell ID from this set by the network node. Scheduling logic 60 within the network node can then schedule a control message to be transmitted to the user equipment 50 in a resource which is available to a user equipment with the assigned Id and that it has determined is safe, that is above the predetermined quality level. In this regard, the scheduling logic 60 may always choose to use a safe resource or it may, choose to use a safe one in a case where the user equipment is identified as being likely to receive a low quality signal, while when it identified as being likely to receive a high quality signal, then it may choose to locate the control message in a resource that is not one of the identified safe resources. In this way efficient use is made of the safe resources.

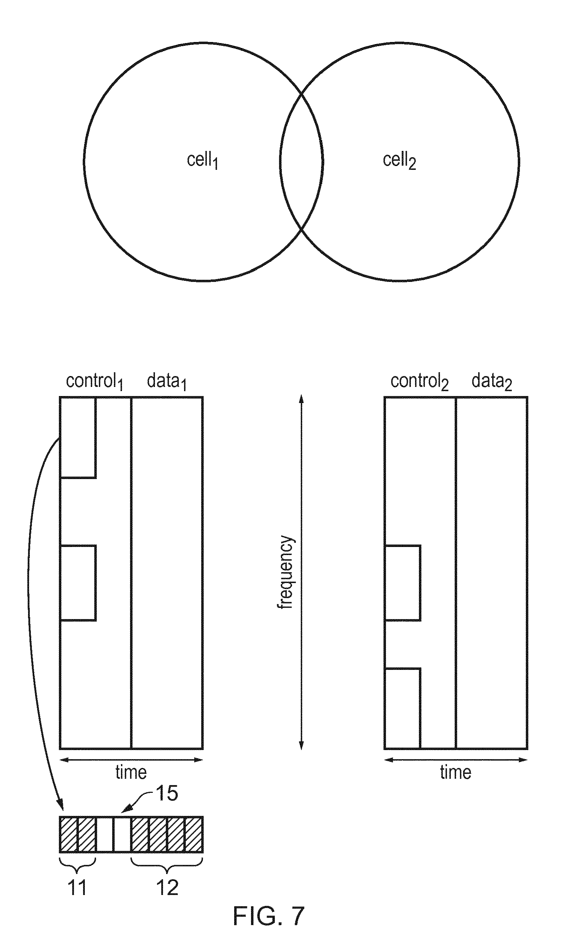

Figure 7 schematically shows the time frequency resource available to two neighbouring cells cell1 and cell2 for transmitting data and control signals. In this example the shaded area indicates two possible resources that could be allocated to send control messages to user equipment. As can be seen of these two there are resources that do not overlap and ones that do. If the overlapping resources were selected by both cells then interference would occur and user equipment close to the edge bordering both cells may not be able to receive the signal. However, the assessing step of embodiments of the invention would have assessed these overlapping resources as unsafe resources and thus, the scheduler of the network node will generally not select one of these blocks for locating the control message or will only do so for user equipment located away from the edge of the cells.

The figure also shows how in this embodiment each block of time frequency resource is divided into eight elements. A control message may consist of a single element, or 2, 4 or 8 elements depending on the level of aggregation of the signal transmitted. As the elements for each message should be located in a single block in a contiguous fashion it is advantageous when allocating control messages to a block 15, if partially filled blocks are filled in preference to empty blocks, where they are available and have sufficient space for the control message. This leaves empty blocks available for messages that have a higher number of elements. Thus, where for example a control message having two CCEs 11 has been located in block 15 and a new control message with say 4 CCEs 12 is to be allocated, then where the user equipment identity allows the partially filled block 15 to be selected, then it is preferentially selected over an empty block.

In some embodiments, once the scheduler has determined where the control messages should be located, then control messages that are in locations adjacent to available spaces may have their aggregation level changed such that they expand to fill the available space. This improves the likelihood of the message being successfully received. Thus, in the example of figure 7 for example, message 11 may be expanded to use 4 CCEs and thus, it and control message 12 will fill block 15.

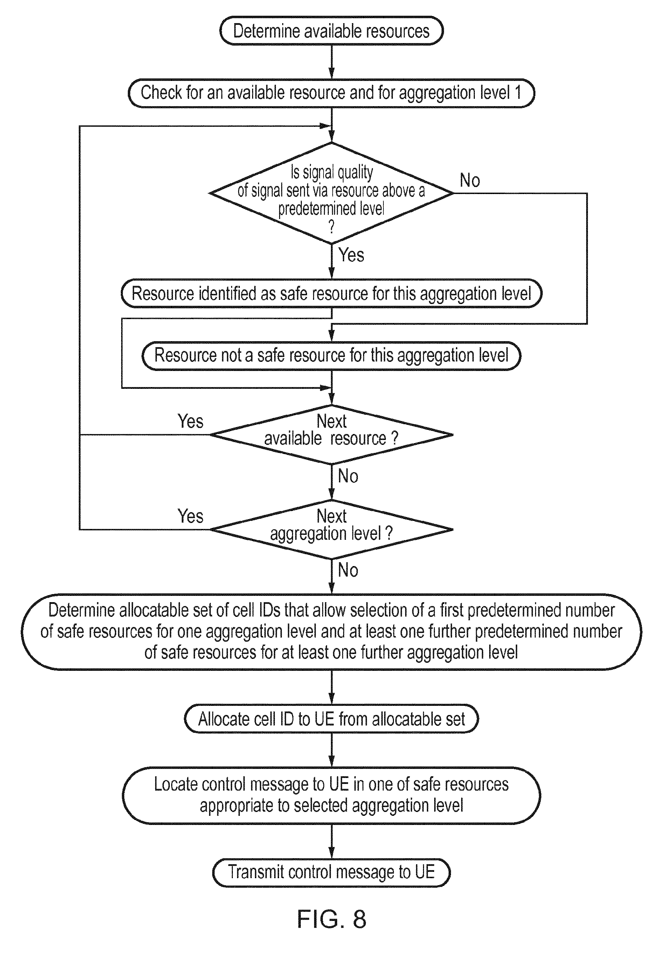

Figure 8 shows a flow diagram illustrating steps in a method according to an embodiment of the present invention. Resources available for control channel use are considered for each of a plurality of aggregation levels. For each time-frequency resource and for each aggregation level it is determined whether the quality of a signal from the network node would, for a particular channel gain scenario, be received at a user equipment with a predetermined quality. This quality level is set dependent on the aggregation level as different aggregation levels can be successfully received with different quality levels. The channel gain scenario may be a scenario for a worst case user such that the safe resources would be safe for all or nearly all users or it may be a different user equipment scenario.

Once these safe or preferred resources have been identified cell IDs that would allow a certain number of safe resources to be allocated for a certain number of aggregation levels are determined. Thus, three safe resources may be required for level 1 aggregation and five for level 2 for example. Cell IDs that would allow allocation of this number of safe resources for these aggregation levels are identified and form a set of cell IDs that are then used for allocation to user equipment. Control messages can then be located within one of the safe resources that is appropriate for the aggregation level and is allowed by the user equipment identity and the control message is transmitted to the user equipment in this time frequency resource where it is very likely to be successfully received and decoded.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1.   A method, performed at a network node within a wireless communication network, of determining a set of user equipment identifiers for allocation to user equipment within a cell of said network node, said method comprising:

   for a plurality of control channel resources that are available to said network node for locating control messages for transmission towards said user equipment, assessing whether a signal transmitted by said network node on said control channel resource has at least a predetermined quality level, said signal quality assessing step including assessing interference within said control channel resource from control messages sent from at least one neighbouring network node; and
   determining said set of user equipment identifiers by selecting user equipment identifiers that allow said control messages for said user equipment to be located in at least a predetermined number of said control channel resources where said quality level of said signal is assessed to be above said predetermined quality level.

2.   A method according to claim 1, wherein said control message is transmitted with one of a plurality of levels of aggregation, and said signal quality assessing step is performed for said plurality of levels of aggregation, said predetermined quality depending on said level of aggregation; and wherein
   said step of selecting user equipment identifiers comprises for each of at least two levels of said levels of aggregation, selecting user equipment identifiers that allow said control messages for said user equipment to be located in at least a predetermined number of said control channel resources where said quality of said signal is assessed to be above said predetermined quality corresponding to said level of aggregation, said predetermined number depending on said level of aggregation.

3.   A method according to any preceding claim, wherein said signal quality assessing step is performed with respect to channel gain and transmit power information for said signal transmitted on said control channel resource.

4.   A method according to claim 3, wherein said channel gain is set to a value appropriate for a user equipment located towards an edge of said cell.

5.   A method according to any preceding claim, wherein said predetermined quality level comprises a safe quality level at which it is determined that a user equipment can receive and decode said message.

6.   A method according to any preceding claim, wherein said signal quality assessing step comprises assessing a signal to interference and noise ratio (SINR) of said signal.

7.   A method according to any preceding claim, wherein said signal quality assessing step is performed for at least two classes of user equipment, said user equipment being classified based on at least one of their distance from said network node and parameters associated with mobility.

8.   A method according to any preceding claim, comprising a further step of:

   determining for a user equipment with a given user equipment identity, said control channel resources that are available for said user equipment; and
   locating a control message for a user equipment in one of said available control channel resources where said quality of said signal was assessed to be above said predetermined quality level.

9.   A method according to any one of claims 1 to 7, comprising a further step of:

determining for a user equipment with a given user equipment identity, said control channel resources that are available for said user equipment; and

locating a control message for a user equipment that is located such that signals are received from the network node with a high quality in one of said available control channel resources where said quality of said signal was assessed to be below said predetermined quality level,

10. A method according to claim 7, comprising a further step of:

determining for a user equipment with a given user equipment identity, said control channel resources that are available for said user equipment; and

determining which of said at least two classes said user equipment falls within; and

locating a control message for a user equipment in one of said available control channel resources where said quality of said signal was assessed to be above said predetermined quality level for said class of said user equipment.

11. A method according to any preceding claim, comprising the further steps of:

determining a minimum transmission power required for transmitting a control message to said user equipment to achieve a desired signal to noise ratio of said signal that allows said user equipment to receive and decode said signal; and

setting said transmission power at or close to said minimum level when transmitting said control signal.

12. A method according to any preceding claim, wherein said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising determining for a user equipment with a given user equipment identity said control channel resources that are available for said user equipment; and

locating said control message within a block of one of said available control channel resource where said quality of said signal was assessed to be above said predetermined quality level; wherein

where said predetermined number of elements of said control message is low enough for said control message to fit within a partially filled one of said blocks, said step of locating comprises preferentially selecting a partially filled block where one is available.

13. A method according to any preceding claim, wherein said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising determining for a user equipment with a given user equipment identity said control channel resources that are available for said user equipment; and

scheduling a plurality of control messages by locating said control messages within blocks of said available control channel resources, at least some of said plurality of control messages being located within blocks where said quality of said signal was assessed to be above said predetermined quality level; wherein

when said scheduling step is complete, determining where a control message is located in a block adjacent to elements that are still available for use and increasing a level of aggregation of said control message by using at least one of said adjacent available elements.

14. A network node for use within a wireless communication network said network node comprising:

determination logic operable to determine a set of user equipment identifiers for allocation to user equipment within a cell of said network node, said determination logic comprising:

assessing logic operable to assess, for a plurality of control channel resources that are available to said network node for locating control messages for transmission to said user equipment, whether a signal transmitted by said network node on said control channel resource has at least a predetermined quality level, said signal quality assessing step including assessing interference within said control channel resource from control messages sent from at least one neighbouring network node; and

selecting logic operable to select user equipment identifiers that allow said control messages for said user equipment to be located in at least a predetermined number of said control channel resources where said quality of said signal is assessed to be above said predetermined quality level.

**15.** A computer program operable when executed by a computer to control said computer to perform a method according to any one of claims 1 to 13.

**Amended claims in accordance with Rule 137(2) EPC.**

**1.** A method, performed at a network node (30) within a wireless communication network, of determining a set of user equipment identifiers for allocation to user equipment (50) within a cell (35) of said network node (30), said method comprising:

for a plurality of control channel resources that are available to said network node for locating control messages for transmission towards said user equipment, assessing whether a signal transmitted by said network node on said control channel resource has at least a predetermined quality level, said signal quality assessing step including assessing interference within said control channel resource from control messages sent from at least one neighbouring network node; and
determining said set of user equipment identifiers by selecting user equipment identifiers that allow said control messages for said user equipment to be located in at least a predetermined number of said control channel resources where said quality level of said signal is assessed to be above said predetermined quality level.

**2.** A method according to claim 1, wherein said control message is transmitted with one of a plurality of levels of aggregation, and said signal quality assessing step is performed for said plurality of levels of aggregation, said predetermined quality depending on said level of aggregation; and wherein
said step of selecting user equipment identifiers comprises for each of at least two levels of said levels of aggregation, selecting user equipment identifiers that allow said control messages for said user equipment to be located in at least a predetermined number of said control channel resources where said quality of said signal is assessed to be above said predetermined quality corresponding to said level of aggregation, said predetermined number depending on said level of aggregation.

**3.** A method according to any preceding claim, wherein said signal quality assessing step is performed with respect to channel gain and transmit power information for said signal transmitted on said control channel resource.

**4.** A method according to claim 3, wherein said channel gain is set to a value appropriate for a user equipment located towards an edge of said cell.

**5.** A method according to any preceding claim, wherein said predetermined quality level comprises a safe quality level at which it is determined that a user equipment can receive and decode said message.

**6.** A method according to any preceding claim, wherein said signal quality assessing step comprises assessing a signal to interference and noise ratio (SINR) of said signal.

**7.** A method according to any preceding claim, wherein said signal quality assessing step is performed for at least two classes of user equipment, said user equipment being classified based on at least one of their distance from said network node and parameters associated with mobility.

**8.** A method according to any preceding claim, comprising a further step of:

determining for a user equipment with a given user equipment identity, said control channel resources that are available for said user equipment; and
locating a control message for a user equipment in one of said available control channel resources where said quality of said signal was assessed to be above said predetermined quality level.

**9.** A method according to any one of claims 1 to 7, comprising a further step of:

determining for a user equipment with a given user equipment identity, said control channel resources that are available for said user equipment; and

locating a control message for a user equipment that is located such that signals are received from the network node with a high quality in one of said available control channel resources where said quality of said signal was assessed to be below said predetermined quality level,

10. A method according to claim 7, comprising a further step of:

determining for a user equipment with a given user equipment identity, said control channel resources that are available for said user equipment; and

determining which of said at least two classes said user equipment falls within; and

locating a control message for a user equipment in one of said available control channel resources where said quality of said signal was assessed to be above said predetermined quality level for said class of said user equipment.

11. A method according to any preceding claim, comprising the further steps of:

determining a minimum transmission power required for transmitting a control message to said user equipment to achieve a desired signal to noise ratio of said signal that allows said user equipment to receive and decode said signal; and

setting said transmission power at or close to said minimum level when transmitting said control signal.

12. A method according to any preceding claim, wherein said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising

determining for a user equipment with a given user equipment identity said control channel resources that are available for said user equipment; and

locating said control message within a block of one of said available control channel resource where said quality of said signal was assessed to be above said predetermined quality level; wherein

where said predetermined number of elements of said control message is low enough for said control message to fit within a partially filled one of said blocks, said step of locating comprises preferentially selecting a partially filled block where one is available.

13. A method according to any preceding claim, wherein said control message is transmitted with one of a plurality of degrees of aggregation and said control channel resources comprise a plurality of blocks of time frequency resource, each of said control messages comprising a predetermined number of elements arranged contiguously within one of said blocks, said predetermined number depending on said level of aggregation, said method comprising

determining for a user equipment with a given user equipment identity said control channel resources that are available for said user equipment; and

scheduling a plurality of control messages by locating said control messages within blocks of said available control channel resources, at least some of said plurality of control messages being located within blocks where said quality of said signal was assessed to be above said predetermined quality level; wherein

when said scheduling step is complete, determining where a control message is located in a block adjacent to elements that are still available for use and increasing a level of aggregation of said control message by using at least one of said adjacent available elements.

14. A network node (30) for use within a wireless communication network said network node comprising:

determination logic (40) operable to determine a set of user equipment identifiers for allocation to user equipment within a cell of said network node, said determination logic comprising:

assessing logic (42) operable to assess, for a plurality of control channel resources that are available to said network node for locating control messages for transmission to said user equipment, whether a signal transmitted by said network node on said control channel resource has at least a predetermined quality level, said signal quality assessing step including assessing interference within said control channel resource from control messages sent from at least one neighbouring network node; and

selecting logic (45) operable to select user equipment identifiers that allow said control messages for said user equipment to be located in at least a predetermined number of said control channel resources where said quality of said signal is assessed to be above said predetermined quality level.

**15.** A computer program operable when executed by a computer to control said computer to perform a method according to any one of claims 1 to 13.

Scheduling probability of logical CCEs at a macro cell with 100 users of sustained load as function of time. Individual time instances corresponds to the activation of a new user with a new C-RNTI. Alcatel-Lucent Golden C-RNTIs for LTE 20 MHz bandwidth are assumed.

FIG. 1

Max. number of small-cell logical PDCCH search spaces (LPC) at L = 8 satisfying SINRmin ≥ −4 dB (averaged over top-ranked 25 small-cell physical cell identities) as a function of the min. small-cell radius. The macro cell uses 6 LPCs at L = 8, at least one common LPC is active. The optimization is for the capacity (C) and mobility (M) problems as shown in Fig. 4. The current system performance is denoted as RANDOM

## FIG. 2

The average small-cell user capacity per subframe as a function of the small-cell offset from the hotspot centre with indicated corresponding fraction of original coverage. Two scheduling strategies are compared in the capacity-problem (CAP) setting (see Fig. 4 for illustration) with the RANDOM benchmark

## FIG. 3

An illustration of the mobility problem (left, MC UE handover failure due to SC interference) and the capacity problem (right, SC UE data loss due to MC interference) in co-channel heterogeneous networks (HetNets).

FIG. 4

TABLE 1
MC/SC CHANNEL OVERLAP IN PERCENT OF SC CHANNEL SIZE ($\Omega_{MC>SC}$) FOR MC/SC PCIs OF 0/342

| MC/SC Ng=1/2 SC PCI=342→ MC PCI=0↓ | CRS ap0 | CRS ap1 | PCFICH | PHICH | LPC0 | LPC1 | LPC2 | LPC3 | LPC4 | LPC5 | LPC6 | LPC7 | LPC8 | LPC9 | other CCEs |
|---|---|---|---|---|---|---|---|---|---|---|---|---|---|---|---|
| CRS ap0 | - | 100 | - | - | - | - | - | - | - | - | - | - | - | - | - |
| CRS ap1 | 100 | - | - | - | - | - | - | - | - | - | - | - | - | - | - |
| PCFICH | - | - | - | 5 | - | 1 | 3 | - | - | - | - | - | - | - | - |
| PHICH | - | - | - | - | 1 | 1 | 4 | 1 | 4 | 3 | 3 | 3 | 1 | 3 | 5 |
| LPC 0 | - | - | - | 10 | - | 15 | 54 | 8 | 8 | 10 | 1 | - | - | - | - |
| LPC 1 | - | - | - | 10 | - | - | 13 | 54 | 7 | 8 | 14 | 1 | - | - | - |
| LPC 2 | - | - | - | 14 | - | - | - | 15 | 51 | 8 | 7 | 11 | 3 | - | - |
| LPC 3 | - | - | - | 10 | - | - | - | - | 15 | 54 | 10 | 7 | 10 | 1 | - |
| LPC 4 | - | - | - | 5 | - | - | - | - | - | 15 | 51 | 10 | 10 | 11 | 2 |
| LPC 5 | - | - | - | 14 | 4 | - | - | - | - | - | 14 | 53 | 10 | 6 | 13 |
| LPC 6 | - | - | 25 | - | 14 | 3 | - | - | - | - | - | 15 | 53 | 11 | 4 |
| LPC 7 | - | - | 25 | 10 | 6 | 13 | 3 | - | - | - | - | - | 14 | 51 | 13 |
| LPC 8 | - | - | 25 | 19 | 11 | 4 | 14 | 3 | - | - | - | - | - | 17 | 58 |
| LPC 9 | - | - | 25 | 5 | 58 | 15 | 4 | 13 | 4 | - | - | - | - | - | 4 |
| other CCEs | - | - | - | - | 6 | 47 | 6 | 6 | 10 | 1 | - | - | - | - | 2 |

FIG. 5

FIG. 6

FIG. 7

Determine available resources

Check for an available resource and for aggregation level 1

Is signal quality
of signal sent via resource above a
predetermined level
?

No

Yes

Resource identified as safe resource for this aggregation level

Resource not a safe resource for this aggregation level

Yes          Next
available  resource ?

No

Yes          Next
aggregation level ?

No

Determine allocatable set of cell IDs that allow selection of a first predetermined number
of safe resources for one aggregation level and at least one further predetermined number
of safe resources for at least one further aggregation level

Allocate cell ID to UE from allocatable set

Locate control message to UE in one of safe resources
appropriate to selected aggregation level

Transmit control message to UE

FIG. 8

Europäisches
Patentamt

European
Patent Office

Office européen
des brevets

# EUROPEAN SEARCH REPORT

Application Number

EP 14 30 6194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 466 940 A1 (MIMOON GMBH [DE]) 20 June 2012 (2012-06-20) * paragraphs [0015] - [0025], [0031] - [0032], [0035] - [0036], [0041], [0045] - [0069], [0072] * ----- | 1-15 | INV. H04L5/00 |
| A | EP 2 385 654 A2 (INTEL CORP INTEL [US]) 9 November 2011 (2011-11-09) * paragraphs [0011] - [0016] * ----- | 1-15 | |

TECHNICAL FIELDS
SEARCHED          (IPC)

H04L

The present search report has been drawn up for all claims

| Place of search | Date of completion of the search | Examiner |
|---|---|---|
| The Hague | 26 January 2015 | Barrientos Lezcano |

EPO FORM 1503 03.82 (P04C01)

## ANNEX TO THE EUROPEAN SEARCH REPORT
## ON EUROPEAN PATENT APPLICATION NO.

EP 14 30 6194

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | | | Publication date | Patent family member(s) | | Publication date |
|---|---|---|---|---|---|---|
| EP 2466940 | A1 | 20-06-2012 | | NONE | | |
| EP 2385654 | A2 | 09-11-2011 | CN | 102238692 A | 09-11-2011 |
| | | | | CN | 102238744 A | 09-11-2011 |
| | | | | CN | 102263812 A | 30-11-2011 |
| | | | | CN | 102859916 A | 02-01-2013 |
| | | | | CN | 102948205 A | 27-02-2013 |
| | | | | CN | 104065467 A | 24-09-2014 |
| | | | | EP | 2385653 A2 | 09-11-2011 |
| | | | | EP | 2385654 A2 | 09-11-2011 |
| | | | | EP | 2567483 A2 | 13-03-2013 |
| | | | | JP | 5213279 B2 | 19-06-2013 |
| | | | | JP | 5317367 B2 | 16-10-2013 |
| | | | | JP | 2011244435 A | 01-12-2011 |
| | | | | JP | 2012015992 A | 19-01-2012 |
| | | | | JP | 2013243725 A | 05-12-2013 |
| | | | | JP | 2013533654 A | 22-08-2013 |
| | | | | KR | 20130023263 A | 07-03-2013 |
| | | | | KR | 20130028927 A | 20-03-2013 |
| | | | | US | 2011267948 A1 | 03-11-2011 |
| | | | | US | 2011267978 A1 | 03-11-2011 |
| | | | | US | 2011268025 A1 | 03-11-2011 |
| | | | | US | 2011268052 A1 | 03-11-2011 |
| | | | | US | 2011268102 A1 | 03-11-2011 |
| | | | | US | 2011269492 A1 | 03-11-2011 |
| | | | | US | 2011269493 A1 | 03-11-2011 |
| | | | | US | 2012034945 A1 | 09-02-2012 |
| | | | | US | 2012063357 A1 | 15-03-2012 |
| | | | | US | 2012063358 A1 | 15-03-2012 |
| | | | | US | 2013287000 A1 | 31-10-2013 |
| | | | | US | 2013336263 A1 | 19-12-2013 |
| | | | | WO | 2011139458 A2 | 10-11-2011 |
| | | | | WO | 2011139462 A2 | 10-11-2011 |

EPO FORM P0459

For more details about this annex : see Official Journal of the European Patent Office, No. 12/82